# EUROPÄISCHE PATENTSCHRIFT

(11) **EP 0 414 839 B1**
(45) Veröffentlichungstag und Bekanntmachung des Hinweises auf die Patenterteilung: **08.09.1993**
(21) Anmeldenummer: 90902184.2
(22) Anmeldetag: 12.01.1990
(51) Int. Cl.: F16D 55/2265, F16J 3/04, F16J 15/52

(54) **SCHUTZKAPPE**
PROTECTIVE CAP
COUVERCLE PROTECTEUR

(30) Priorität: 09.02.1989 DE 3903744; 06.12.1989 DE 3940276
(43) Veröffentlichungstag der Anmeldung: 06.03.1991
(73) Patentinhaber: ITT Automotive Europe GmbH, 60488 Frankfurt (DE)
(72) Erfinder: WEILER, Rolf, D-6239 Eppstein 2 (DE); BACH, Uwe, D-6272 Niedernhausen (DE); CEYLAN, Ahmet, D., D-6000 Frankfurt/Main (DE); WEIDENWEBER, Michael, D-6000 Frankfurt/Main 70 (DE)
(86) Internationale Anmeldenummer: EP9000064
(87) Internationale Veröffentlichungsnummer: WO9009534

(56) Entgegenhaltungen:
- DE-A- 3 610 018
- DE-C- 3 032 513
- DE-C- 3 309 644
- FR-A- 1 184 741
- US-A- 3 995 502

## Beschreibung

Die Erfindung betrifft eine Schutzkappe für zylindrische Teile gemß dem Oberbegriff des Anspruchs 1.

Aus der DE-A-35 14 497 ist eine solche Schutzkappe für zylindrische Teile bekannt, deren Endabschnitt in einen im wesentlichen U-förmigen Metallring gelagert ist. Ein Zusammenfügen von Ring und Manschette wird in Handarbeit vorgenommen.

Der Erfindung liegt daher die Aufgabe zugrunde, eine in ihrem Endabschnitt verbesserte Schutzkappe anzugeben, deren Befestigung bzw. Montage in einem auf einem Bolzen sitzenden Ring vereinfacht und/oder erleichtert ist.

Die Aufgabe wird gemäß den Merkmalen des kennzeichnenden Teils des Anspruchs 1 gelöst. Erfindungsgemäß trägt eine Faltmanschette der Schutzkappe an ihrem einen Endabschnitt einen ringförmigen Wulst mit einem nockenförmigen Querschnitt, wobei der Wulst aufgrund seiner Nockenform über einen sich radial erstreckenden Vorsprung eines Ringes springt und mit seinem Abschnitt geringeren Krümmungsradius hinter dem Vorsprung lösbar einrastet. Bei dem Zurückfahren des Gehäuses von dem Ring verdreht sich der nockenförmige Wulst in dem Ring, so daß nun ein Abschnitt mit kleinerem Radius an dem sich radial erstreckenden Vorsprung anliegt.

In vorteilhafter Weise weist der sich radial erstreckende Vorsprung einen Konus auf, der als Rampe dient und den Wulst aufweitet, so daß der Wulst in einfacher Weise über den Konus gleiten und hinter dem Vorsprung einrasten kann.

In vorteilhafter Weise ist die Manschette mit mehreren radial ausgerichteten Falten ausgebildet, von denen die dem Ende am nächsten liegende einen geringeren radial äußeren Durchmesser als die nachfolgende aufweist, so daß die sich beim axialen Zusammenpressen ausbauchenden Falten der Faltmanschette die axial äußere Falte nicht axial über ein Ende des Bolzens überstehen lassen, um ein Abscheren und damit eine Beschädigung der Faltmanschette zu vermeiden.

Unterstützt wird die einfache Montage dadurch, daß der axial auf den Wulst,drückende Faltengrund eine ringförmig umlaufende Kante aufweist. Die Kante wirkt als zweite Rampe und greift unter den Wulst, so daß dieser mit diesem Schaufeleffekt über den sich radial erstreckenden Vorsprung bewegt wird.

Vorteilhaft ist die Faltmanschette einteilig mit einer Bolzenführungshülse ausgebildet, so daß ein einziges Teil sowohl die Funktion einer Schutzmanschette als auch die Funktion eines dämpfenden Zentriermittel zwischen Gehäuse und Bremsträger versieht.

Vorteilhaft ist auf der Gewindeseite der Bolzenführung, also auf dem Teil, mit dem die Bremse an dem integrierter Achsschenkel angeschraubt werden soll, eine Scheibe aufgesetzt, die sowohl gegen den genannten Ring als auch gegen einen einen größeren Durchmesser aufweisenden Teil der Bolzenführung anschlägt.

Nachfolgend ist ein Ausführungsbeispiel der Erfindung anhand der Zeichnungen näher erläutert.

Es zeigen
- Fig. 1: eine Faltmanschette einer Schutzkappe mit nockenförmigem Wulst,
- Fig. 2: einen profilierten Ring für die Befestigung der Faltmanschette,
- Fig. 3: einen Montagevorgang, bei dem die Faltmanschette am Ring eingerastet wird und
- Fig. 4: eine Bolzenführung einer Teilbelag-Scheibenbremse mit der Faltmanschette.

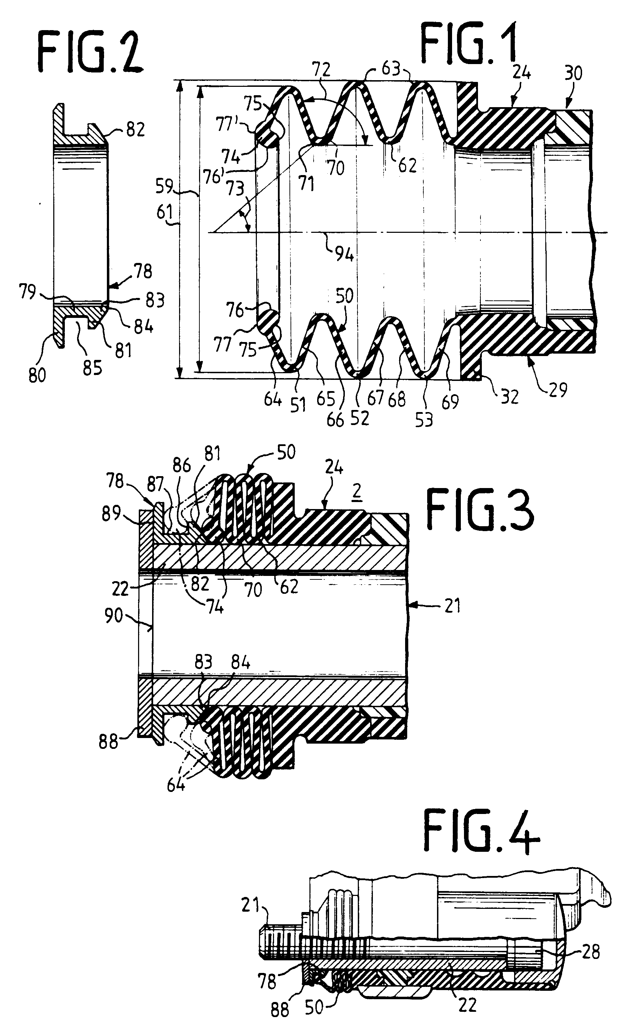

Fig. 1 zeigt die Faltmanschette 50 der Schutzkappe 24 mit den Falten 51,52,53. Jede der Falten 51,52,53 weist zwei sich im wesentlichen radial erstreckende Faltenwände 64,65,66,67 und 68,69 auf. An einem ringförmig umlaufenden Faltengrund 70 zwischen den Wänden 65,66 der Falten 51,52 ist eine ringförmig umlaufende Kante 71 vorgesehen, deren Flächen einen Winkel 72 von etwa 70° einnehmen. Die Kante 71 zeigt mit ihrer Spitze unter einem zweiten Winkel 73 von etwa 35° auf die Mittelachse 94 der Schutzkappe 24 und kann somit unter einen im Querschnitt nockenförmigen ringförmig umlaufenden Wulst 74 der Faltmanschette 50 greifen. Der Wulst 74 weist in einem ersten der Wand 65 gegenüberliegenden Abschnitt 75 einen ersten kleinen Krümmungsradius 75' von etwa 0,2 mm, in einem zweiten zur Mittelachse 94 gerichteten Bereich 76 einen zweiten Krümmungsradius 76' von etwa 0,7 mm und in einem dritten nach außen von der Wand 65 abgewandten Bereich 77 einen Radius 77' von etwa 1,1 mm auf. Die Faltenhöhen 63 der Falten 52,53 weisen denselben Durchmesser 61 auf, der auch für den Vorsprung 32 gilt. Der Durchmesser 59 der Faltenhöhe an der axial äußeren Falte 51 ist geringer als der Durchmesser 61. Die Schutzkappe 24 weist die Faltmanschette 50 auf, deren erster Endabschnitt als Dämpfungselement 29 ausgebildet und deren zweiter Endabschnitt von den Falten 51,52,53 und dem Wulst 74 gebildet ist.

Fig. 2 zeigt einen Ring 78 aus Metall mit einem hülsenförmigen Abschnitt 79, der an einem Ende einen ringförmig umlaufenden radialen Vorsprung 81 aufweist und an seinem anderen Ende mit einem sich radial erstreckenden Ringbund 80 versehen ist. Der Ringbund 80 erstreckt sich radial weiter nach außen als der Vorsprung 81. Der Ring 78 weist eine konische Rampe 82 auf, die auf einer dem Ringbund 80 abgewandten Seite an dem Vorsprung 81 ausgebildet ist. Die Rampe 82 schließt an ihrer äußeren Kante 83 mit einer sich radial erstreckenden Fläche 84 ab. Die Ringabschnitte 79,80, 81 begrenzen eine Ausnehmung 85.

Fig. 3 zeigt eine automatische Montage, bei der der Wulst 74 über die Rampe 82 gleitet und hinter dem Vorsprung 81 einrastet. Dabei ist der Ring 78 starr mit einer Hülse 22 verbunden, die auf einem Führungsbolzen 21 sitzt. Über diese Hülse 22 gleitet das Gehäuse 2 und nimmt dabei die Schutzkappe 24 mit. Die Faltmanschette 50 wird axial zusammengepresst und der Wulst 74 sowie die Faltengründe 62,70 werden solange in Anlage an der Hülse 22 gehalten, bis eine Kante 83 des Ringes 78, der Wulst 74 und die Faltengründe 62,70 axial aneinander anschlagen. Der Wulst 74 wird auf Grund der Scherwirkung der Kante 83 und der Kante 71 radial nach außen bewegt und gleitet über die Rampe 82 hoch. Dabei liegt der Abschnitt 77 mit dem größten Krümmungsradius 77' an der Kante 83 an und überwindet die sich radial erstreckende Fläche 84 an der Kante 83 des Vorsprungs 81. Auch der Faltengrund 70 wird beim weiteren Zusammenpressen des Ringes 78 und der Schutzkappe 24 über die Rampe 82 gleiten, bis der Wulst 74 lösbar hinter dem Vorsprung 81 einrastet. Beim Zurückfahren des Gehäuses 2 dreht sich der Wulst 74 in der Ausnehmung 85 des Ringes 78 und gerät mit seinen Abschnitten 75, 76 geringerer Krümmungsradien 75', 76' an die sich radial erstreckende Fläche 86 und eine Umfangsfläche 87 des hülsenförmigen Abschnitts 79. Dabei ist die Bewegung der Faltenwand 64 und des Wulstes 74 mit strichpunktierten Linien dargestellt. Durch die spezielle Wulstform mit größerem äußeren Krümmungsradius 77' und kleinerem inneren Krümmungsradius 75', 76', sowie eine einen Schaufeleffekt bewirkende scharfe Kante 71 an der zu dem Wulst 74 benachbarten Falte 51 und eine Rampe 82 am Ring 78 wird eine selbstätige Montage der Schutz- kappe erreicht.

Fig. 4 zeigt eine Bolzenführung einer Teilbelag-Scheibenbremse mit der Manschette 50, die mit ihrem Wulst 74 in der Ausnehmung 85 des Ringes 78 eingerastet ist. Der Ring 78 wird mit Hilfe einer Scheibe 88, die sowohl gegen die Hülse 22 als auch gegen den Ring 78 anschlägt, soweit auf die Hülse 22 aufgeschoben, bis Stirnflächen 89,90 (Figur 3) axial auf gleicher Höhe zueinander angeordnet sind.

## Patentansprüche

1. Schutzkappe für zylindrische Teile mit einer elastischen Faltmanschette (50), deren erster Endabschnitt am Umfang eines Gehäuses (2) und deren zweiter Endabschnitt am Umfang einer auf einem Bolzen (21), geführten Hülse (22) befestigbar ist, und mit einem zur Aufnahme des zweiten Endabschnittes vorgesehenen auf der Hülse (22) sitzenden Ring (78) mit einem im wesentlichen radialen Vorsprung (81), wobei der Ring (78) auf der Hülse (22) fest angeordnet ist und auf dem Ring (78) der zweite Endabschnitt der Faltmanschette (50) teilweise aufsitzt, dadurch **gekennzeichnet,** daß die Faltmanschette (50) an ihrem zweiten Endabschnitt einen ringförmigen Wulst (74) trägt, dessen Querschnitt zwei unterschiedlich große Krümmungsradien (77', 76') aufweist, wobei ein Abschnitt (77) mit dem größeren Krümmungsradius (77') auf einer Außenseite des Wulstes (74) dem Ring (78) zugewandt und auf den Ring (78) aufschiebbar angeordnet ist und ein Abschnitt (76) mit dem kleineren Krümmungsradius (76') auf der dem Innenraum der Faltmanschette (50) zugewandten Seite des Wulstes (74) angeordnet ist.

2. Schutzkappe nach Anspruch 1, dadurch **gekennzeichnet**, daß der Wulst (74) aufweitbar und dehnbar und mit seinem Abschnitt (77) größeren Krümmungsradius (77') über den radialen Vorsprung (81) des Ringes (78) auf einen hülsenförmigen Abschnitt (79) des Ringes (78) schiebbar ist.

3. Schutzkappe nach Anspruch 1 oder 2, dadurch **gekennzeichnet**, daß der radiale Vorsprung (81) auf seiner dem hülsenförmigen Abschnitt (79) abgewandten Seite mit einer konischen Rampe (82) versehen ist.

4. Schutzkappe, nach einem der vorhergehenden Ansprüche, dadurch **gekennzeichnet,** daß die Faltmanschette (50) mehrere radial ausgerichtete Falten (51,52,53) aufweist, von denen die dem Wulst (74) am nächsten liegende Falte (51) einen geringeren radialen äußeren Durchmesser (59,61) als die nachfolgende Falte (52) aufweist.

5. Schutzkappe nach einem der vorhergehenden Ansprüche, dadurch **gekennzeichnet,** daß ein dem Wulst (74) benachbarter Faltengrund (70) eine unter den Wulst (74) greifende Kante (71) aufweist.

6. Schutzkappe nach einem der vorhergehenden Ansprüche, dadurch **gekennzeichnet,** daß der erste Endabschnitt der Faltmanschette (50) als Führung (29) für die Hülse (22) ausgebildet ist.

7. Schutzkappe nach einem der vorhergehenden Ansprüche, dadurch **gekennzeichnet,** daß der hülsenförmige Abschnitt (79) des Ringes (78) auf der der Faltmanschette (50) abgewandten Seite gegen eine Scheibe (88) anschlägt.

8. Schutzkappe nach einem der vorhergehenden Ansprüche, dadurch **gekennzeichnet,** daß der Ring (78) einen zweiten sich radial erstreckenden ringförmig umlaufenden Ringbund (80) aufweist.

## Claims

1. A dust cover for cylindrical parts comprising an elastic pleated cup (50) whose first end section is fixable to the circumference of a housing (2) and whose second end section is fixable to the circumference of a bushing (22) guided on the circumference of a pin (21), and comprising a ring (78) intended to accommodate the second end section, seated on the bushing (22) and presenting a substantially radial web (81), the said ring (78) being stationarily positioned on the bushing (22) and the second end section of the pleated cup (50) being partly rested on the ring (78),
**characterized** in that at its second end section the pleated cup (50) carries a ring-shaped torus (74), whose cross-section exhibits two differently large radii of curvature (77', 76'), one section (77) having the larger radius of curvature (77') being arranged on an outer side of the torus (74) facing the ring (78) and being slidable over said ring (78), and one section (76) having the smaller radius of curvature (76') being arranged on the side of the torus (74) facing the inner space of the pleated cup (50).

2. A dust cover as claimed in claim 1,
**characterized** in that the torus (74) is expansible and dilatable and is slidable, with its section (77) having a larger radius of curvature (77'), over the radial web (81) of the ring (78) onto a bushing-shaped section (79) of the ring (78).

3. A dust cover as claimed in claim 1 or 2,
**characterized** in that the radial web (81) is furnished with a conical ramp (82) on its side facing away from the bushing-shaped section (79).

4. A dust cover as claimed in any one of the preceding claims,
**characterized** in that the pleated cup (50) is furnished with a plurality of radially directed pleats (51, 52, 53), out of which the pleat (51) being situated nearest to the torus (74) has a smaller radially outer diameter (59, 61) than the subsequent pleat (52).

5. A dust cover as claimed in any one of the preceding claims,
**characterized** in that a pleat ground (70) adjacent to the torus (74) is formed with an edge (71) making catch beneath the torus (74).

6. A dust cover as claimed in any one of the preceding claims,
**characterized** in that the first end section of the pleated cup (50) is configured as a guide (29) for the bushing (22).

7. A dust cover as claimed in any one of the preceding claims,
**characterized** in that, on the side facing away from the pleated cup (50), the bushing-shaped section (79) of the ring (78) strikes against a disc (88).

8. A dust cover as claimed in any one of the preceding claims,
**characterized** in that the ring (78) is furnished with a second radially extending ring-shaped circumferential annular collar (80).

## Revendications

1. Capuchon protecteur pour éléments cylindriques, comprenant un soufflet plissé élastique (50) dont un premier segment terminal peut être fixé à la périphérie d'un corps (2) et dont le deuxiéme segment terminal peut être fixé à la périphérie d'une douille (22) guidée sur une tige (21), et une bague (78) qui est montée sur la douille (22), est prévue pour recevoir le second segment terminal, et possède une saillie (81) sensiblement radiale, la bague (78) étant montée fixe sur la douille (22) et le second segment terminal du soufflet plissé (50) étant partiellement appuyé sur la bague (78), caractérisé en ce que le soufflet plissé porte, sur son second segment terminal, un bourrelet annulaire (74) dont la section transversale présente deux rayons de courbure différents (77', 76'), un segment (77) qui possède le plus grand rayon de courbure (77') étant disposé sur un côté extérieur du bourrelet (74), dirigé vers la bague (78) et en position pour être emmanché sur la bague (78), et un segment (76) qui possède le plus petit rayon de courbure (76') étant disposé sur le côté du bourrelet (74) gui est dirigé vers le volume intérieur du soufflet plissé (50).

2. Capuchon protecteur selon la revendication 1, caractérisé en ce que le bourrelet (74) peut s'élargir et se dilater et peut être emmanché par son segment (77) de plus grand rayon de courbure (77') sur un segment (79) en forme de manchon de la bague (78) après avoir franchi la saillie radiale (81) de la bague (78).

3. Capuchon protecteur selon la revendication 1 ou 2, caractérisé en ce que la saillie radiale (81) est munie d'une rampe conique (82) sur son côté le plus éloigné du segment (79) en forme de manchon.

4. Capuchon protecteur selon une des revendications précédentes, caractérisé en ce que le soufflet plissé (50) présente plusieurs plis (51, 52, 53) orientés radialement, dont le pli (51) gui est le plus proche du bourrelet (74) présente un plus petit diamètre extérieur radial (59, 61) que le pli suivant (52).

5. Capuchon protecteur selon une des revendications précédentes, caractérisé en ce qu'un fond (70) de pli voisin du bourrelet (74) présente une arête (71) qui s'engage sous le bourrelet (74).

6. Capuchon protecteur selon une des revendications précédentes, caractérisé en ce que le premier segment terminal du soufflet plissé (50) forme un guidage (29) pour la douille (22).

7. Capuchon protecteur selon une des revendications précédentes, caractérisé en ce que le segment (79) en forme de manchon de la bague (78) bute contre une rondelle (88) sur le côté le plus éloigné du soufflet plissé (50).

8. Capuchon protecteur selon une des revendications précédentes, caractérisé en ce que la bague (78) présente une seconde collerette annulaire (80) orientée radialement et s'étendant en anneau.
